# EUROPEAN PATENT APPLICATION

(11) **EP 4 621 955 A1**
(43) Date of publication of application: **24.09.2025**
(21) Application number: 25158554.3
(22) Date of filing: 18.02.2025
(51) Int. Cl.: H01M 50/211, H01M 50/202

(54) **BATTERY PACK AND METHOD OF FORMING BATTERY PACK**

(30) Priority: 22.03.2024 KR 20240039799
(71) Applicant: Samsung SDI Co., Ltd., Yongin-si, Gyeonggi-do 17084 (KR)
(72) Inventor: WANG, Hanjun, Yongin-si, 17084 (KR)
(74) Representative: Marks & Clerk LLP

(57) **Abstract**

The present disclosure relates to a battery pack (10) and a method of forming a battery pack (10). The battery pack (10) includes a stack cell (100) including a plurality of battery cells (110), a holder (200) surrounding the stack cell (100) and including a communication hole (210) through which at least a part of the stack cell (100) is exposed to outside of the holder (200), and a case (300) surrounding the holder (200). An adhesive (G) is provided for fixing the stack cell (100), the holder (200), and the case (300) together.

## Description

### BACKGROUND

### 1. Field

One or more embodiments relate to a battery pack and a method of forming a battery pack.

### 2. Description of the Related Art

Secondary batteries are batteries designed to be charged and discharged and may be used as energy sources for mobile devices, electric vehicles, hybrid vehicles, electric bicycles, uninterruptible power supplies, etc. Single secondary batteries or multi-secondary batteries (secondary battery modules) in which a plurality of battery cells are connected as a unit are used according to the types of external devices that employ secondary batteries.

The above information disclosed in this Background section is only for enhancement of understanding of the background of the disclosure, and therefore, it may contain information that does not constitute the related art.

### SUMMARY

One or more embodiments include a battery pack that may increase a fixing force between a battery cell and a case.

However, the technical problems to be solved by embodiments are not limited to those described herein, and other solved problems not mentioned herein will be clearly understood by one of ordinary skill in the art from the following description.

Additional aspects will be set forth in part in the description which follows and, in part, will be apparent from the description, or may be learned by practice of the presented embodiments.

According to one or more embodiments, a battery pack includes a stack cell including a plurality of battery cells, a holder surrounding the stack cell and including at least one communication hole through which at least a part of the stack cell is exposed to outside of the holder, a case surrounding the holder, and an adhesive for fixing the stack cell, the holder, and the case together.

The adhesive may be configured to fix the stack cell, the holder, and the case together in an area adjacent to the at least one communication hole.

The at least one communication hole may have a form of a long hole extending in any one of a longitudinal direction, a width direction, and a height direction of the holder.

The at least one communication hole may include a side surface hole formed in a side surface of the holder, and a corner hole formed in a top surface of the holder at a position corresponding to the side surface hole.

The side surface hole may be spaced apart from a center of the side surface in a longitudinal direction of the holder, may be adjacent to a corner portion of the holder, and may have a form of a hole extending in the longitudinal direction of the holder.

A plurality of side surface holes may be positioned side by side in the longitudinal direction of the holder and may be spaced apart from each other in a height direction of the holder, wherein the holder further includes a plurality of ribs between the plurality of side surface holes.

The adhesive fixes the stack cell, the holder, and the case together on an inner surface of the holder and an outer surface of the holder in an area adjacent to the side surface hole.

The holder may further include a coupling surface formed on the side surface of the holder, and a first protrusion formed on the side surface.

The holder may further include a second protrusion adjacent to a corner portion of the holder, wherein the side surface hole is between the first protrusion and the second protrusion in a longitudinal direction of the holder.

The adhesive may be applied between or around the first protrusion and the second protrusion.

A plurality of coupling surfaces may be provided on side surfaces of the holder, wherein a plurality of protrusions are provided at sides of the coupling surface.

The communication hole may include a rear surface hole in a rear surface of the holder, and a rear hole in a top surface of the holder.

The rear hole may be positioned adjacent to the rear surface hole, may be at a rear edge of the top surface of the holder, and is open to the rear surface hole.

The adhesive may fix the stack cell, the holder, and the case together on an inner surface of the holder and an outer surface of the holder around the rear surface hole.

The at least one communication hole may include a front hole in a top surface of the holder, wherein the holder further includes a slit formed in a front surface thereof and into which a tab portion of each of the plurality of battery cell is inserted.

According to another embodiment, a method is provided for forming a battery pack. The method includes injecting an adhesive into at least one communication hole formed in a holder surrounding a stack cell, the stack cell including a plurality of battery cells, wherein the adhesive spreads in the battery pack so as to fix together the stack cell, the holder, and a case surrounding the holder.

The at least one communication hole may include a corner hole formed in a top surface of the holder and a side surface hole formed in a side surface of the holder, and the adhesive may be injected into the corner hole and flows through the side surface hole so as to fix the stack cell, the holder, and the case together on an inner surface of the holder and an outer surface of the holder in an area adjacent to the side surface hole.

The at least one communication hole may include a rear surface hole formed in a rear surface of the holder and a rear hole formed in a top surface of the holder, and the adhesive may be injected into the rear hole and flows through the rear surface hole to fix the stack cell, the holder, and the case together on an inner surface of the holder and an outer surface of the holder in an area adjacent to the rear surface hole.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings.

The accompanying drawings illustrate preferred embodiments and together with the foregoing disclosure, serve to provide further understanding of the technical features of the disclosure, and thus, the disclosure is not limited to the drawings, in which:
FIG. 1 illustrates a battery pack;
FIG. 2 is an exploded perspective view illustrating the battery pack;
FIG. 3 illustrates a case and a cover;
FIG. 4 illustrates a stack cell;
FIG. 5 is an exploded perspective view illustrating the stack cell;
FIG. 6 illustrates a battery cell;
FIG. 7 illustrates a holder viewed in one direction;
FIG. 8 illustrates the holder viewed in another direction;
FIG. 9 illustrates a side surface of the holder;
FIG. 10 illustrates a rear surface of the holder;
FIG. 11 illustrates a top surface of the holder; and
FIGS. 12 to 15 illustrate a state in which an adhesive is injected into the holder.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, embodiments will be described in more detail with reference to the accompanying drawings. The described embodiments, however, may have various modifications and may be embodied in different forms, and should not be construed as being limited to only the illustrated embodiments herein. Further, each of the features of the various embodiments may be combined or combined with each other, in part or in whole, and technically various interlocking and driving are possible. Each embodiment may be implemented independently of each other or may be implemented together in an association. The described embodiments are provided as examples so that this disclosure will be thorough and complete, and will fully convey the aspects of the disclosure to those skilled in the art. It should be understood that the disclosure covers all the modifications, equivalents, and replacements within the idea and technical scope of the disclosure. Accordingly, processes, elements, and techniques that are not necessary to those having ordinary skill in the art for a complete understanding of the aspects of the disclosure may not be described.

Unless otherwise noted, like reference numerals, characters, or combinations thereof denote like elements throughout the attached drawings and the written description, and thus, descriptions thereof will not be repeated. Further, parts that are not related to, or that are irrelevant to, the description of the embodiments might not be shown to make the description clear.

In the drawings, the relative sizes of elements, layers, and regions may be exaggerated for clarity. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result, for example, of manufacturing techniques and/or tolerances, are to be expected. Further, specific structural or functional descriptions disclosed herein are merely illustrative for the purpose of describing embodiments according to the concept of the disclosure. Thus, embodiments disclosed herein should not be construed as limited to the illustrated shapes of regions, but are to include deviations in shapes that result from, for instance, manufacturing.

The regions illustrated in the drawings are schematic in nature and their shapes are not intended to illustrate the actual shape of a region of a device and are not intended to be limiting. Additionally, as those skilled in the art would realize, the described embodiments may be modified in various ways, all without departing from the scope of the disclosure.

In the detailed description, for the purposes of explanation, numerous specific details are set forth to provide a thorough understanding of various embodiments. It is apparent, however, that various embodiments may be practiced without these specific details or with one or more equivalent arrangements. In other instances, well-known structures and devices are shown in block diagram form to avoid unnecessarily obscuring various embodiments.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" may encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include layer, stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it may be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it may be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it may be the only element or layer between the two elements or layers, or one or more intervening elements or layers may also be present.

For the purposes of this disclosure, expressions such as "at least one of," or "any one of," when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terms used in the present application are merely used to describe specific embodiments, and are not intended to limit the disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components. However, these terms do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "about" may mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which the disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

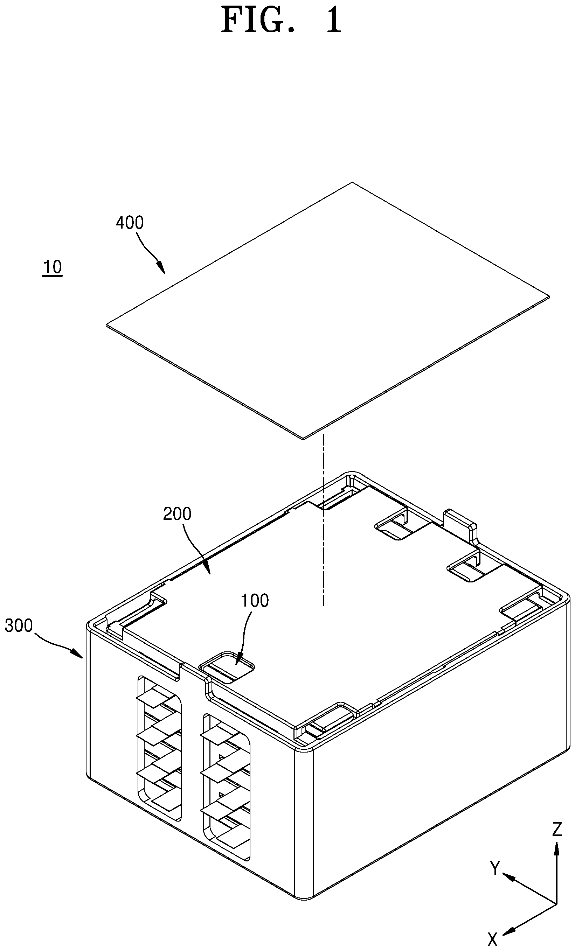

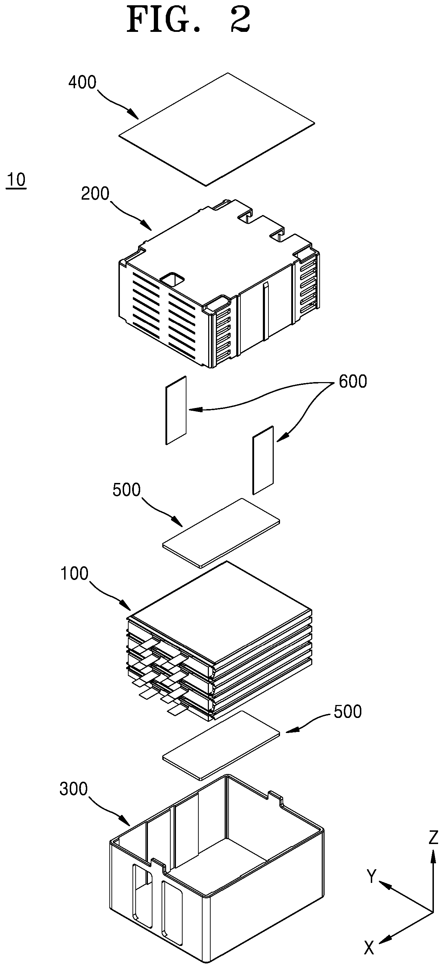

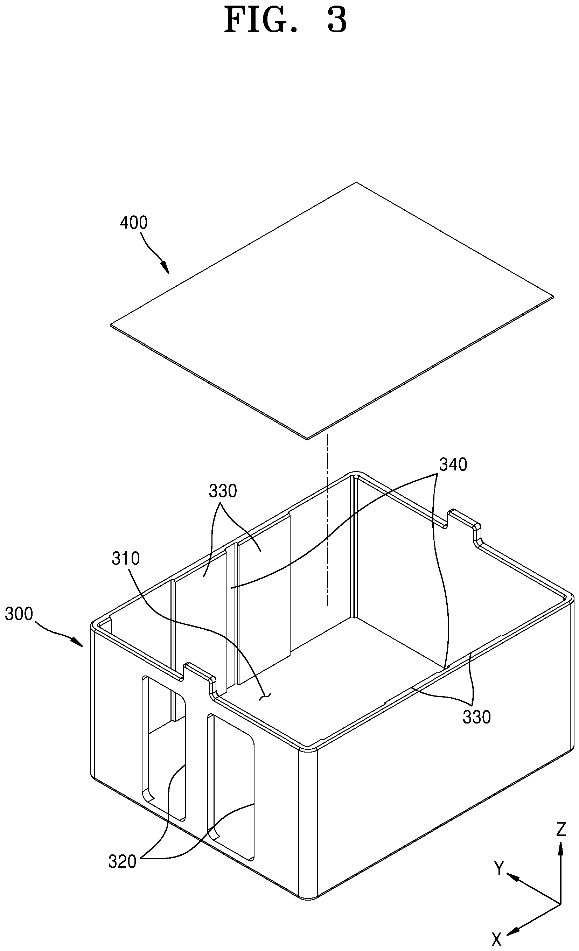

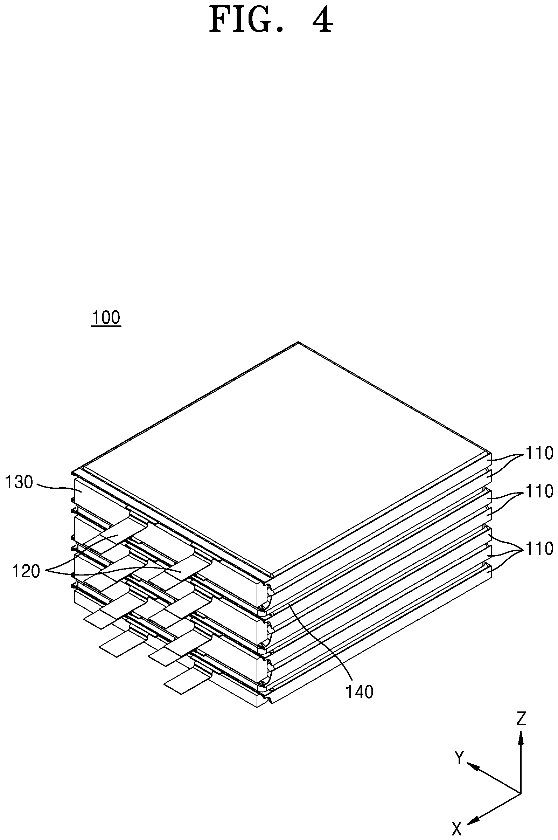

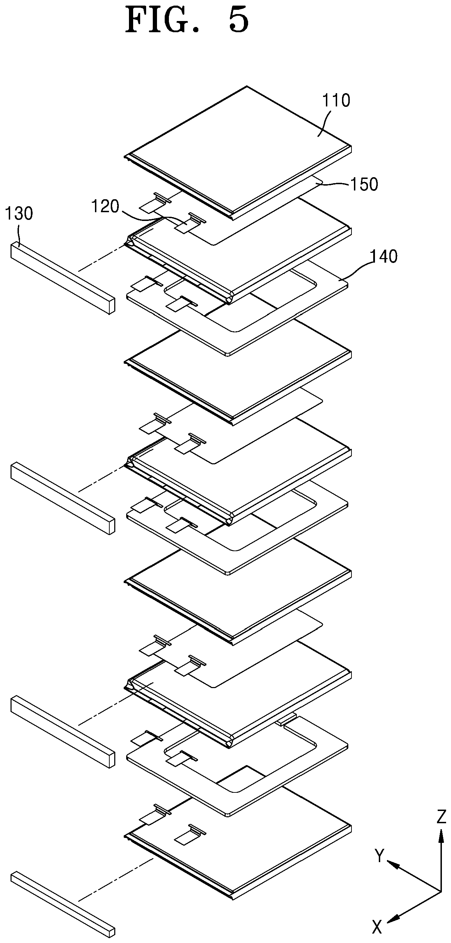

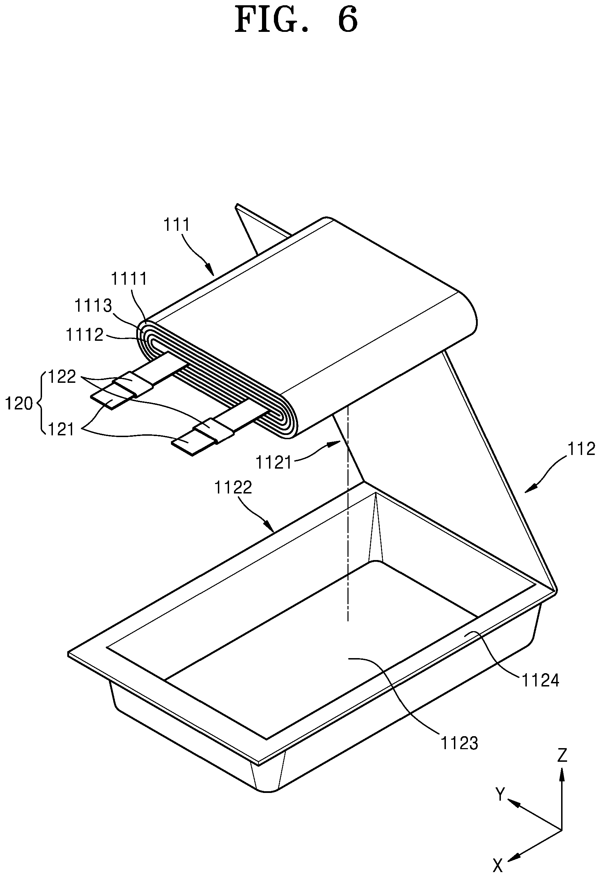

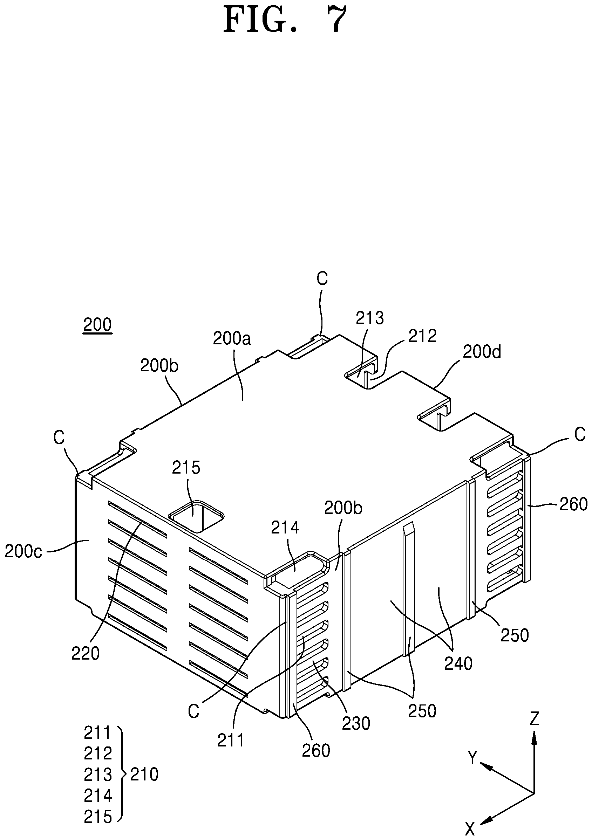

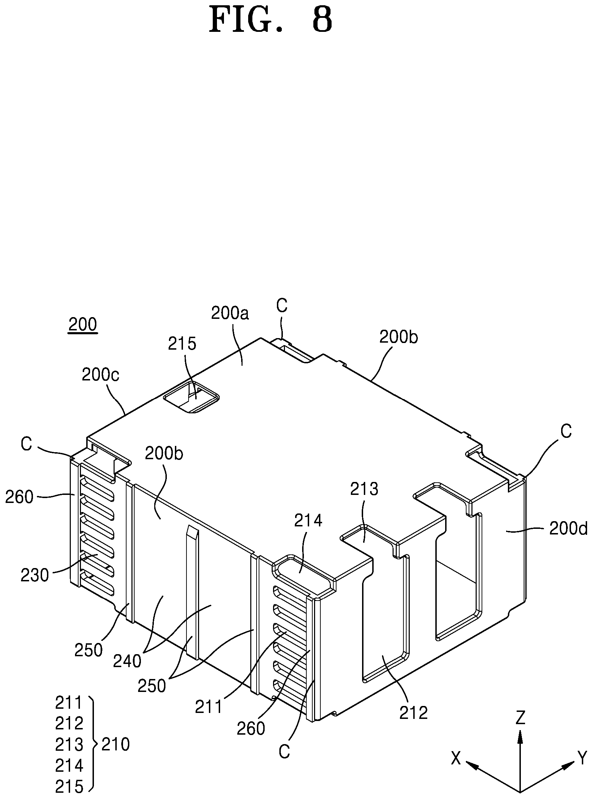

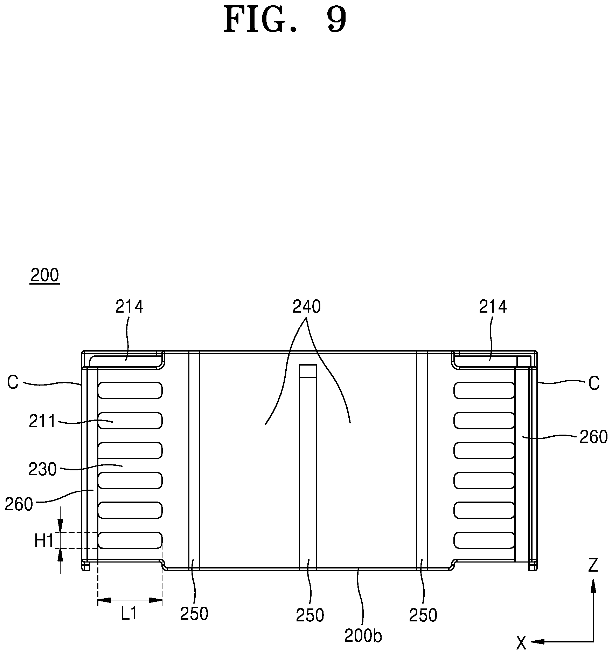

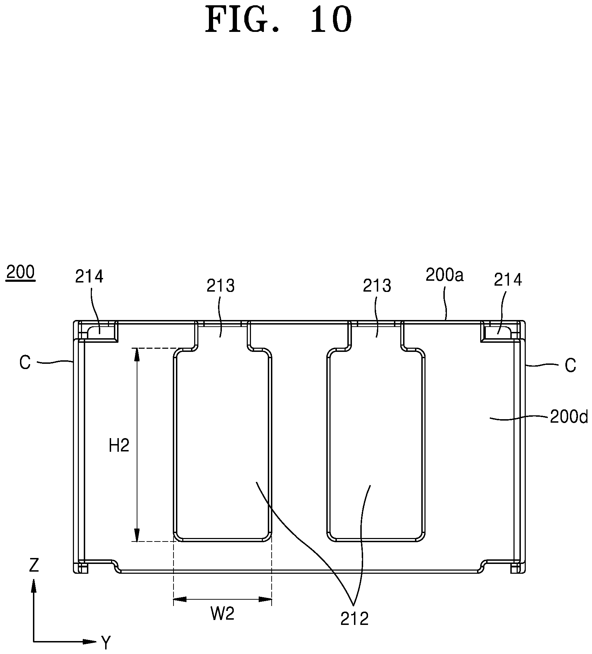

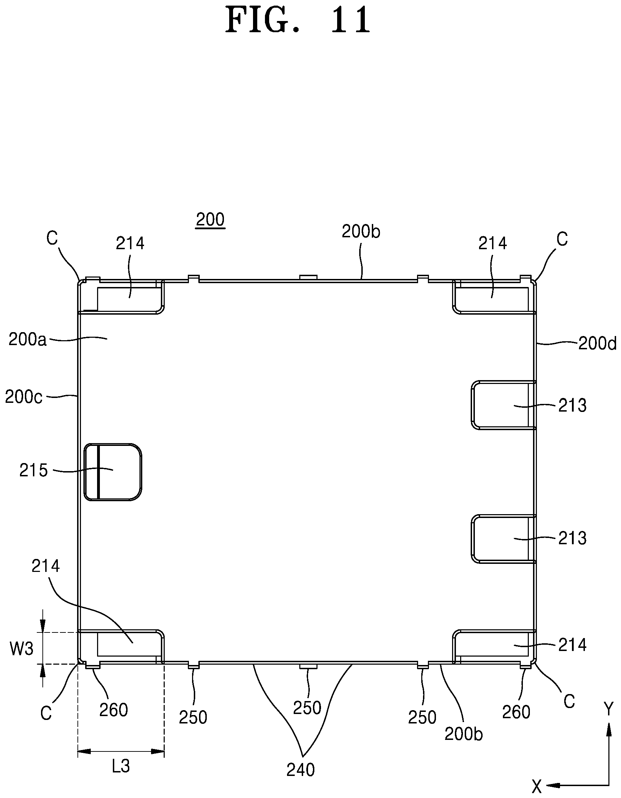

FIG. 1 illustrates a battery pack 10. FIG. 2 is an exploded perspective view illustrating the battery pack 10. FIG. 3 illustrates a case 300 and a cover 400. FIG. 4 illustrates a stack cell 100. FIG. 5 is an exploded perspective view illustrating the stack cell 100. FIG. 6 illustrates a battery cell 110. FIG. 7 illustrates a holder 200 viewed in one direction. FIG. 8 illustrates the holder 200 viewed in another direction. FIG. 9 illustrates a side surface of the holder 200. FIG. 10 illustrates a rear surface of the holder 200. FIG. 11 illustrates a top surface of the holder 200.

The battery pack 10 refers to a battery assembly that supports the stack cell 100 in which a plurality of battery cells 110 are combined into one group to protect the plurality of battery cells 110 from external impact, heat, vibration, etc. The battery pack 10 may include the plurality of battery cells 110 each having a prismatic shape, a pouch shape, or a cylindrical shape. The following will be described in an embodiment where the battery pack 10 includes the stack cell 100 including the plurality of battery cells 110 each having a pouch shape. The battery pack 10 may be applied to a large application such as an energy storage system (ESS) or a small application such as an electric tool. Alternatively, the battery pack 10 may be used in an electric vehicle. The battery pack 10 may be used alone or may be electrically connected to another battery pack 10. The battery pack 10 may include the stack cell 100 including the plurality of battery cells 110, the holder 200 that surrounds the stack cell 100 and includes a communication hole 210 through which at least a part of the stack cell 100 is exposed to outside of the holder 200, the case 300 surrounding the holder 200, and an adhesive G for fixing the stack cell 100, the holder 200, and the case 300 together. In particular, the adhesive G may be configured to fix the stack cell 100, the holder 200, and the case 300 together around the communication hole 210 (i.e., in an area adjacent to the communication hole 210).

The battery pack 10 may include the stack cell 100, the holder 200, the case 300, the cover 400, a fixing tape 500, and a support 600.

The stack cell 100 may be a collection of the plurality of battery cells 110. The stack cell 100 may be supported on the holder 200 by the adhesive G. The stack cell 100 may include the battery cells 110, tab portions 120, support members 130, separation members 140, and fixing members 150.

The battery cells 110 are pouch-type battery cells and may be stacked in a height direction (e.g., a Z-axis direction of FIG. 4) of the battery pack 10 to form the stack cell 100. The plurality of battery cells 110 may be individually stacked in the height direction of the battery pack 10 while being separated from each other. Alternatively, the plurality of battery cells 110 may be folded toward each other and stacked in the height direction of the battery pack 10 while being connected in one direction. Although there are seven battery cells 110 included in the stack cell 100 illustrated in FIG. 4, the number of battery cells 110 is not limited to seven. For example, the number of battery cells 110 included in the stack cell 100 may be two to six or may be eight or more. The battery cell 110 may be formed by winding and/or stacking an electrode assembly in which a separator is positioned between a negative electrode layer and a positive electrode layer.

Each of the battery cells 110 may include an electrode assembly 111 and a housing 112.

The electrode assembly 111 may be manufactured in a jelly roll form by winding a first electrode plate 1111, a second electrode plate 1112 and a separator 1113 between the first electrode plate 1111 and the second electrode plate 1112. Alternatively, the electrode assembly 111 may be manufactured in a stack form by stacking the separator 1113 between a plurality of first and second electrode plates 1111 and 1112. Alternatively, the electrode assembly 111 may be manufactured by applying both a jelly roll form and a stack form.

The first electrode plate 1111 includes a first active material coated portion formed by intermittently coating a first active material on a first substrate, which is a sheet-shaped conductive material, and a first uncoated portion on which the first active material is not coated such that the first substrate is exposed. For example, the first electrode plate 1111 may be a negative electrode plate, and the first active material may be a negative electrode active material including a carbon material such as crystalline carbon, amorphous carbon, a carbon composite, or a carbon filter, a lithium metal, or a lithium alloy.

The second electrode plate 1112 has a polarity different from that of the first electrode plate 1111, and includes a second active material coated portion formed by intermittently coating a second active material on a second substrate, which is a sheet-shaped conductive material, and a second uncoated portion on which the second active material is not coated such that the second substrate is exposed. For example, the second electrode plate 1112 may be a positive electrode plate, and the second active material may include a positive electrode active material including LiCoO₂, LiNiO₂, LiMnO₂, LiMn₂O₄, LiNi_{1-x-y}CoₓM_{y}O₂ (where M is a metal), or LiFePO₄ (LFP).

The separator 1113 is between the first electrode plate 1111 and the second electrode plate 1112. The separator 1113 may insulate the first electrode plate 1111 from the second electrode plate 1112 and may exchange lithium ions between the first electrode plate 1111 and the second electrode plate 1112. The separator 1113 may have a sufficient length to completely insulate between the first electrode plate 1111 and the second electrode plate 1112 even when the electrode assembly 111 contracts or expands while the battery cell 110 is charged and discharged.

The tab portion 120 may include cell tabs 121 and film portions 122.

The cell tabs 121 may be located on each of the first electrode plate 1111 and the second electrode plate 1112 and may protrude to one side of the battery cell 110. For example, one pair of cell tabs 121 may be provided to correspond to the first electrode plate 1111 and the second electrode plate 1112. The cell tab 121 may be electrically connected to one side of the first uncoated portion and may extend toward outside of the electrode assembly 111. Also, the cell tab 121 may be electrically connected to one side of the second uncoated portion of the second electrode plate 1112 and may extend toward outside of the electrode assembly 111.

The film portion 122 may be on the cell tab 121. The film portion 122 is on one surface of the cell tab 121 or surrounds the cell tab 121. The film portion 122 may seal the cell tab 121 that is exposed to the outside of the electrode assembly 111. For example, in order to prevent a short-circuit from occurring when the cell tab 121 contacts a metal layer exposed at an end of a sealing portion 1124 of the housing 112, the film portion 122 is thermally fused to the sealing portion 1124 so that the cell tab 121 and the sealing portion 1124 are tightly coupled to each other.

The housing 112 forms the exterior of the battery cell 110 and the electrode assembly 111 is positioned in the housing 112. The shape and size of the housing 112 are not particularly limited, and the housing 112 may have a shape and size corresponding to the electrode assembly 111. For example, as shown in FIG. 6, the housing 112 may have a rectangular parallelepiped shape providing an inside space. Alternatively, the housing 112 may have another polyhedral shape or a cylindrical shape.

The housing 112 may include a cover 1121, a lower housing 1122, an inner space 1123, and the sealing portion 1124.

The lower housing 1122 may provide the inner space 1123 with dimensions greater than the dimensions of the electrode assembly 111, and the electrode assembly 111 may be inserted into the inner space 1123. The cover 1121 may be connected to a top surface of the lower housing 1122 to be opened and closed and may cover the lower housing 1122 when the electrode assembly 111 is inserted into the inner space 1123.

The sealing portion 1124 may be formed along an upper edge of the lower housing 1122. In a state where the electrode assembly 111 is accommodated in the lower housing 1122, a part of the tab portion 120 may be exposed to outside of the housing 112. The film portion 122 provided on the tab portion 120 may be provided between the cover 1121 and the lower housing 1122 at a position corresponding to the sealing portion 1124. Accordingly, the battery cell 110 with the electrode assembly 111 accommodated in the lower housing 112 may be formed.

Each battery cell 110 may include one or more tab portions 120. The tab portion 120 may extend from the battery cell 110 and may be connected to a substrate tab such as a protective circuit module. For example, as shown in FIG. 4, each of the battery cells 110 may include two tab portions 120. The two tab portions 120 may be respectively connected to the first electrode plate 1111 and the second electrode plate 1112 of the battery cell 110.

Support members 130 may be positioned on one side of the battery cell 110 to support the tab portions 120. For example, as shown in FIG. 4, a support member 130 may be on a terrace of one surface (e.g., a front surface in an X-axis direction of FIG. 4) of the battery cell 110. One support member 130 may correspond to two battery cells positioned adjacent to each other in the height direction of the battery pack 10 and may support the tab portion 120 of each battery cell 110. The support member 130 may have a bar shape and may support the tab portion 120 so that the tab portion 120 is not excessively bent or damaged.

One or more separation members 140 may be included in the stack cell 100. For example, one separation member 140 may correspond to two adjacent battery cells 110. The separation member 140 may separate adjacent battery cells 110 from each other so that if one battery cell 110 expands, it is prevented from pressing or damaging another battery cell 110. For example, as shown in FIG. 5, the separation member 140 may include an opening at an inner side of the separation member 140. The opening of the separation member 140 may be positioned to correspond to the center of the battery cell 110 to thereby form a spare space between adjacent battery cells 110. Accordingly, even if the center of the battery cell 110 swells, the battery cell 110 may be prevented from contacting another battery cell 110 or a force of pressing another battery cell 110 may be reduced.

The fixing members 150 may be positioned between two adjacent battery cells 110 to fix the two battery cells 110 to each other. For example, as shown in FIGS. 4 and 5, one surface of the fixing member 150 may be attached to a top surface or a bottom surface of one of the battery cells 110, and the other surface of the fixing member 150 may be attached to a top surface or a bottom surface of an adjacent battery cell 110, to fix the two adjacent battery cells 110 to each other in the height direction. The fixing member 150 may be positioned to correspond to the center of the battery cell 110 and may have a smaller size than the battery cell 110. For example, the fixing member 150 may be inside the outer perimeter of the battery cell 110 in a longitudinal direction (e.g., the X-axis direction of FIG. 4) of the stack cell 100 and/or a width direction (e.g., a Y-axis direction of FIG. 4) of the stack cell 100. The fixing member 150 may have, for example, a polygonal shape such as a triangular shape or a quadrangular shape, a circular shape, or an elliptical shape. An adhesive material may be applied to both surfaces of the fixing member 150.

The stack cell 100 may include a plurality of (e.g., seven) battery cells 110. The plurality of battery cells 110 may be stacked in the height direction (e.g., the Z-axis direction of FIG. 4) of the battery pack 10 and each battery cell 110 may include a plurality of (e.g., two) tab portions 120. One support member 130 may be on terraces of two battery cells 110 that are adjacent to each other in the height direction, and each support member 130 may support the plurality of tab portions 120. The separation members 140 and the fixing members 150 may be provided between adjacent battery cells 110. The separation members 140 and the fixing members 150 may be at different levels, i.e., different positions in the Z-axis direction of FIG. 4. That is, the separation members 140 and the fixing members 150 may be alternately located, and may not be between the same two adjacent battery cells 110. For example, when the separation member 140 is between one battery cell 110 and the battery cell 110 adjacent in one direction to the one battery cell 110, the fixing member 150 may be between the one battery cell 110 and the battery cell 110 adjacent in the other direction to the one battery cell 110.

The holder 200 may be connected to the case 300 to support the stack cell 100. The holder 200 may prevent the stack cell 100 from colliding with and being damaged by the case 300. In a state where the stack cell 100 is accommodated in the holder 200, the holder 200 may be accommodated in a receiving space 310 of the case 300. One surface (e.g., a bottom surface facing an inner bottom surface of the case 300) of the holder 200 may be open. Accordingly, in a state where the stack cell 100 is accommodated in the holder 200, the fixing tape 500 attached to a bottom surface of the stack cell 100 may contact the inner bottom surface of the case 300. The holder 200 may be connected to the stack cell 100 and the case 300 by the adhesive G.

The holder 200 may include the communication hole 210, a front slit 220, a rib 230, a coupling surface 240, a first protrusion 250, and a second protrusion 260.

One or more communication holes 210 may be formed in the holder 200 so that the inside and the outside of the holder 200 communicate with each other. The adhesive G may be injected through the communication hole 210 and the injected adhesive G may move to the stack cell 100 and the case 300. Also, the stack cell 100, the holder 200, and the case 300 may be fixed to each other by the adhesive G around the communication hole 210. One or more communication holes 210 may be formed in at least one of a top surface 200a, a side surface 200b, a front surface 200c, and a rear surface 200d of the holder 200. As shown in FIG. 7, based on four corner portions C of the holder 700, one surface in the X-axis direction may be the front surface 200c, and two surfaces connected to both sides of the front surface 200c may be the side surfaces 200b. Also, a surface facing the front surface 200c may be the rear surface 200d, and one surface in the Z-axis direction may be the top surface 200a. The communication hole 210 may have a form of a long hole extending in any one of a longitudinal direction, a width direction, and a height direction of the holder 200.

The communication hole 210 may include a side surface hole 211, a rear surface hole 212, a rear hole 213, a corner hole 214, and a front hole 215.

The side surface hole 211 may be formed in a surface of the holder 200. For example, the side surface hole 211 may be formed in at least one of the side surfaces 200b of the holder 200. The side surface hole 211 may be formed adjacent to the corner portion C of the holder 200. For example, as shown in FIG. 7, a plurality of side surface holes 211 may extend side by side in the longitudinal direction (e.g., the X-axis direction of FIG. 7) of the holder 200 and may be spaced apart from each other in the height direction (e.g., the Z-axis direction of FIG. 7) of the holder 200. Each side surface hole 211 may have a form of a hole (e.g., a long hole) extending in the longitudinal direction of the holder 200 and may be positioned between the first protrusion 250 and the second protrusion 260. Also, the side surface hole 211 may be formed at a position corresponding to the corner hole 214. As shown in FIG. 9, when the holder 200 is viewed from the side, an imaginary line that connects the centers of a plurality of side surface holes 211 adjacent to one corner portion C may pass through a corresponding corner hole 214. Alternatively, a plurality of side surface holes 211 adjacent to one corner portion C may be positioned toward an inside of the holder 200 relative to a corresponding corner hole 214 in the longitudinal direction (e.g., the X-axis direction of FIG. 7) of the holder 200. Alternatively, a plurality of side surface holes 211 adjacent to one corner portion C may overlap a corresponding corner hole 214 in the height direction (e.g., the Z-axis direction of FIG. 7) of the holder 200. Accordingly, when the adhesive G is injected into the corner hole 214, the injected adhesive G may move downward by gravity and be applied to the inside and the outside of the plurality of side surface holes 211. Thus, the stack cell 100, the holder 200, and the case 300 may be fixed together on an inner surface and an outer surface of the holder 200 around the side surface holes 211.

Each of the side surface holes 211 may have a length L1 in the longitudinal direction (e.g., the X-axis direction of FIG. 9) of the holder 200 and may have a height H1 in the height direction (e.g., the Z-axis direction of FIG. 9) of the holder 200. The length L1 of the side surface hole 211 may be equal to or less than a length of the corner hole 214. Accordingly, the adhesive G moving through the side surface hole 211 may be prevented from being applied to an excessively wide area. Although six side surface holes 211 are shown, the number of side surface holes 211 may be five or less or seven or more. The side surface holes 211 may be spaced apart from the center in the longitudinal direction of the holder 200 to be adjacent to the corner portion C of the holder 200, and the side surface holes 211 may have a form of a long hole in the longitudinal direction of the holder 200.

Because the side surface holes 211 are between the first protrusion 250 and the second protrusion 260, the adhesive G introduced from the side surface hole 211 to the side surface 200b of the holder 200 may not flow to another region of the side surface 200b. Accordingly, another region of the holder 200 may not be contaminated by the adhesive G, and the stack cell 100, the holder 200, and the case 300 may be firmly fixed at a position where the side surface holes 211 are formed.

One or more rear surface holes 212 may be formed in the rear surface 200d of the holder 200. For example, as shown in FIGS. 7 and 8, two rear surface holes 212 may be formed in the rear surface 200d of the holder 200, and the two rear surface holes 212 may be spaced apart from each other in the width direction (e.g., the Y-axis direction of FIG. 8) of the holder 200. Each of the rear surface hole 212 may be provided in a region where the stack cell 100, the holder 200, and the case 300 are fixed by the adhesive G. For example, the rear surface hole 212 may be connected to the rear hole 213, and the adhesive G injected from the rear hole 213 may be introduced into the rear surface hole 212. Thus, the stack cell 100, the holder 200, and the case 300 may be fixed to each other by the adhesive G on an inner surface and an outer surface of the holder 200 around the rear surface holes 212. The rear surface holes 212 may be between two adjacent corner portions C.

Each of the rear surface holes 212 may have a width W2 in the width direction (e.g., the Y-axis direction of FIG. 10) of the holder 200 and may have a height H2 in the height direction (e.g., the Z-axis direction of FIG. 10) of the holder 200. Although two rear surface holes 212 are shown, the number of rear surface holes 212 may be one, or three or more.

One or more rear holes 213 may be formed in the holder 200 to communicate with the rear surface holes 212 (e.g., open to the rear surface holes 212). For example, as shown in FIGS. 7 and 8, the rear holes 213 may be in the top surface 200a of the holder 200 at positions corresponding to each rear surface holes 212. Two rear holes 213 may be formed at a rear edge of the top surface 200a. The rear holes 213 are inlets through which the adhesive G is injected, and the injected adhesive G may move to the rear surface holes 212 to connect the stack cell 100 to the holder 200 and connect the holder 200 to the case 300. A rear edge of the rear holes 213 may be connected to the rear surface holes 212.

One or more corner holes 214 may be formed to correspond to the corner portions C of the holder 200. The corner holes 214 are inlets through which the adhesive G is injected, and the injected adhesive G may be introduced into the side surface holes 211. For example, as shown in FIGS. 7 and 8, one corner hole 214 may be formed at each of four corner portions C of the holder 200. Also, each of the corner holes 214 may be formed in the top surface 200a, the side surface 200b, and the front surface 200c around a corresponding one of the corner portions C, or may be formed in the top surface 200a, the side surface 200b, and the rear surface 200d around a corresponding one of the corner portions C. The corner portions 214 may be at more outer positions than the rear holes 213 in the width direction of the holder 200 and may be at a higher position than the side surface holes 211 in the height direction of the holder 200. The corner holes 214 may be formed in the top surface 200a of the holder 200 at positions corresponding to the side surface holes 211.

Each of the corner holes 214 may have a length L3 in the longitudinal direction (e.g., the X-axis direction of FIG. 11) of the holder 200 and may have a width W3 in the width direction (e.g., the Y-axis direction of FIG. 11) of the holder 200. The length L3 of the corner hole 214 may be equal to or greater than the length L1 of the side surface hole 211.

One or more front holes 215 may be formed in one surface of the holder 200. For example, one front hole 215 may be formed in the top surface of the holder 200 at a position that is adjacent to the front slit 220. When necessary, the adhesive G may be injected through the front hole 215. The injected adhesive G may fix a front surface of the stack cell 100, for example, a terrace of the stack cell 100, the tab portion 120 of the stack cell 100, or the support member 130 to a front surface of the holder 200 in an area adjacent to the front slit 220. Alternatively, when necessary, a wiring connected in the stack cell 100 may pass through the front hole 215. The front hole 215 may be between two side surface holes 211 adjacent to each other in the width direction of the holder 200.

One or more front slits 220 may be formed in the front surface 200c of the holder 200 at positions corresponding to front openings 320 of the case 300. For example, as shown in FIG. 7, the front slits 220 may be formed in the front surface 200c of the holder 200 and may extend in the width direction (e.g., the Y-axis direction of FIG. 7) of the holder 200. The tab portions 120 of the battery cells 110 may protrude through the front slits 220 to outside of the holder 200 and the case 300.

One or more ribs 230 may be formed on both side surfaces 200b of the holder 200 at positions adjacent to the side surface holes 211. For example, as shown in FIG. 7, the ribs 230 may be formed between two adjacent side surface holes 211. That is, each rib 230 may be formed between two different adjacent side surface holes 211. When the adhesive G injected into the corner hole 214 flows into and out of the holder 200 through the side surface holes 211, the ribs 230 may uniformly distribute the adhesive G around a plurality of side surface holes 211 and may prevent an excessive amount of adhesive G from leaking out of the holder 200. Also, the ribs 230 may increase the rigidity of the side surface 200b of the holder 200 in which the plurality of side surface holes 211 are formed. The ribs 230 may be formed adjacent to the corner portions C and may be positioned between the first protrusion 250 and the second protrusion 260.

The coupling surface 240 may be formed on at least one of the side surfaces 200b of the holder 200 and may be a region where the holder 200 and the case 300 are coupled to each other. For example, as shown in FIG. 7, the coupling surface 240 may be a region divided on the side surface 200b of the holder 200 by a plurality of first protrusions 250, and two coupling surfaces 240 may be formed on one side surface 200b. A protruding portion 330 of the case 300 may be coupled to the coupling surface 240. For example, when the holder 200 is slid downward into the case 300, the protruding portion 330 may be inserted into each coupling surface 240 and the first protrusion 250 may be positioned between two protruding portions 330 so that the holder 200 and the case 300 are coupled to each other.

The first protrusions 250 may be formed on both side surfaces 200b of the holder 200. For example, as shown in FIG. 7, a plurality of first protrusions 250 may be formed on both sides of the coupling surface 240. The first protrusions 250 may extend in the height direction on the side surface 200b of the holder 200 to divide and separate the coupling surface 240. Also, the first protrusions 250 may be inserted into insertion grooves 340 to couple the holder 200 to the case 300. For example, three first protrusions 250 may be formed on one side surface 200b. The coupling surface 240 may be divided between two first protrusions 250 at both ends in the longitudinal direction (e.g., the X-axis direction of FIG. 7) of the holder 200, and the first protrusion 250 in the middle may separate the coupling surface 240 into two surfaces. Also, the first protrusion 250 in the middle may be inserted into the insertion groove 340 to connect the holder 200 to the case 300. On each coupling surface 240, two first protrusions 250 may be formed at both ends, and one first protrusion 250 may be formed between the two first protrusions 250.

One or more second protrusions 260 may be formed adjacent to the corner portions C of the holder 200. For example, as shown in FIG. 7, one second protrusion 260 may be formed adjacent to each corner portion C. The second protrusions 260 may extend in the height direction (e.g., the Z-axis direction of FIG. 7) of the holder 200. The second protrusions 260 may divide a region where the side surface hole 211 is formed together with the first protrusion 250 and may function as a partition wall that prevents the adhesive G introduced through the side surface hole 211 from being excessively introduced into another region.

The case 300 may support elements of the battery pack 10 (e.g., the stack cell 100, the holder 200, the cover 400, the fixing tape 500, and the support 600). The stack cell 100 and the holder 200 may be positioned in an inner space of the case 300, and the fixing tape 500 may be provided on an inner bottom surface of the case 300 so that the stack cell 100 is fixed to the case 300. Also, the cover 400 may be detachably located on the case 300. In a state where the stack cell 100 and the holder 200 are located in the case 300, the fixing tape 500 may be provided on a top surface of the stack cell 100, and the fixing tape 500 may be attached to the cover 400 while the cover 400 covers the top of the case 300. The case 300 may be connected to the holder 200 with the adhesive G.

The case 300 may include the receiving space 310, the front opening 320, the protruding portion 330, and the insertion groove 340.

The receiving space 310 is a space formed inside the case 300 and the stack cell 100 and the holder 200 may be positioned in the receiving space 310. In a state where the stack cell 100 is accommodated in the receiving space 310, a part of the stack cell 100 (e.g., the tab portion 120) may protrude to outside of the receiving space 310. The receiving space 310 may be opened and closed by the cover 400.

The front opening 320 may be formed in a front surface (e.g., one surface in the X-axis direction of FIG. 3) of the case 300. In a state where the stack cell 100 is positioned in the receiving space 310, the tab portion 120 may protrude out of the front opening 320. For example, as shown in FIG. 3, two front openings 320 may be formed to correspond to the tab portions 120 of each of the battery cells 110.

One or more protruding portions 330 may be formed on the case 300 to help couple the holder 200 to the case 300. For example, as shown in FIG. 3, the protruding portions 330 may be formed on an inner side surface of the case 300 to face the receiving space 310. The protruding portions 330 may protrude from the inner side surface of the case 300 toward the receiving space 310 and a plurality of protruding portions (e.g., two protruding portions) may be formed on each of the side surfaces of the case 300. The protruding portions 330 may be inserted into the coupling surface 240 of the holder 200 to support the holder 200 and the case 300.

One or more insertion grooves 340 may be formed in the case 300 to help couple the holder 200 to the case 300. For example, as shown in FIG. 3, the insertion grooves 340 may be formed in the inner side surfaces of the case 300 to face the receiving space 310. The insertion grooves 340 may be recessed with respect to the protruding portions 330, and one insertion groove 340 may be formed in each of the side surfaces of the case 300. As shown in FIG. 3, the insertion groove 340 may be formed between two protruding portions 330 and may extend in the height direction (e.g., the Z-axis direction of FIG. 3) of the battery pack 10. One of the first protrusions 250 of the holder 200 may be inserted into the insertion groove 340 to fix the holder 200 to the case 300.

The cover 400 may open and close the receiving space 310 of the case 300 and may be detachably attached to the case 300. For example, as shown in FIG. 1, the cover 400 may cover the top of the case 300 in a state where the stack cell 100 and the holder 200 are positioned in the case 300. Alternatively, the cover 400 may be rotatably connected to the case 300 through a hinge or the like.

The fixing tape 500 may fix the stack cell 100 to the holder 200 and the case 300. For example, as shown in FIG. 2, the fixing tape 500 may be positioned on each of the top surface and the bottom surface of the stack cell 100 to fix the top surface of the stack cell 100 to an inner top surface of the holder 200 and to fix the bottom surface of the stack cell 100 to the inner bottom surface of the case 300. The fixing tape 500 may be positioned to correspond to the center of the stack cell 100. Although two fixing tapes 500 are shown, two or more fixing tapes 500 may be on each of the top surface and the bottom surface of the stack cell 100.

The supports 600 may prevent the stack cell 100 from contacting the holder 200 and damage to the stack cell 100 if the battery pack 10 is shaken or damaged. One or more of the supports 600 may be between the stack cell 100 and the holder 200. One support 600 may be to correspond to a corresponding one of the side surfaces of the stack cell 100, with one surface of the support 600 facing a side surface of the stack cell 100 and the other surface of the support 600 facing an inner side surface of the holder 200. A height of the support 600 may be equal to or less than a height of the stack cell 100 in the height direction.

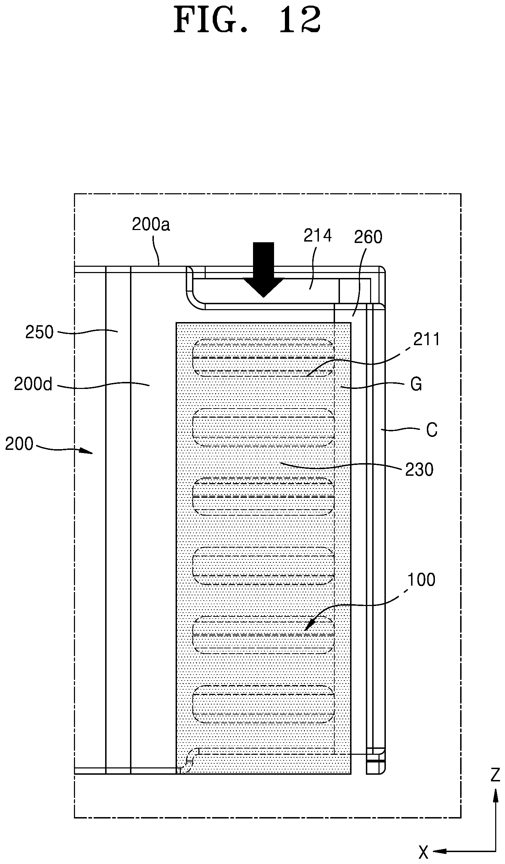

FIGS. 12 to 15 illustrate a state where the adhesive G is injected into the holder 200.

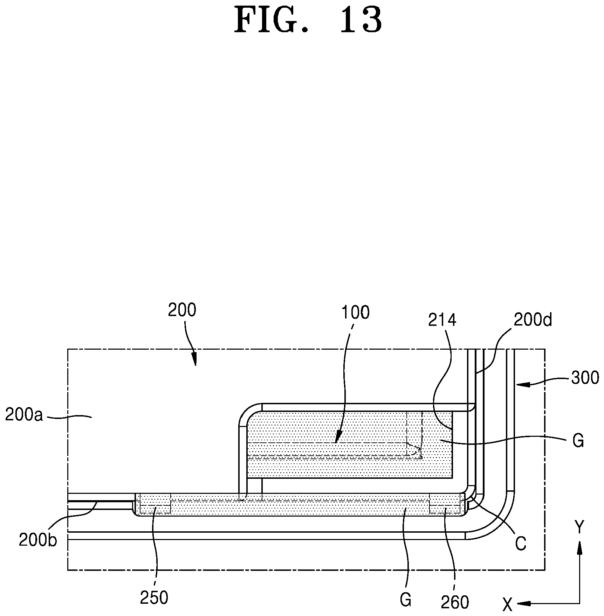

As shown in FIG. 12, the adhesive G may be injected into the battery pack 10 through the corner hole 214, and the injected adhesive G may move downward by its own weight. As the adhesive G moves along an inner side of the side surface 200b of the holder 200, a portion of the adhesive G may flow to the outside of the side surface 200b through the side surface hole 211 and the remaining portion may flow to the inside of the side surface 200b. The adhesive G, which has a certain viscosity, may flow around a plurality of side surface holes 211, as shown in FIG. 12. As shown in FIG. 13, the adhesive G may be applied to the inside and the outside of the holder 200 with respect to the corner hole 214. Accordingly, the stack cell 100 inside the holder 200 may be fixed to the holder 200, and the holder 200 may be fixed to the case 300 outside the holder 200. Thus, the stack cell 100, the holder 200, and the case 300 may be fixed by the adhesive G around the side surface hole 211. Accordingly, even if the battery pack 10 is shaken or receives an external impact, the stack cell 100, the holder 200, and the case 300 may stay fixed relative to each other, thereby preventing the stack cell 100 from colliding with the holder 200 or the holder 200 from colliding with the case 300.

The adhesive G injected into the corner hole 214 may be applied to a region between or around the first protrusion 250 and the second protrusion 260. For example, as shown in FIG. 13, a portion of the adhesive G injected into the corner hole 214 may flow to the outside of the holder 200 through the plurality of side surface holes 211 and may be applied between or around the first protrusion 250 and the second protrusion 260. In this regard, FIG. 12 illustrates a state where the adhesive G injected into the corner hole 214 is applied to a region between the first protrusion 250 and the second protrusion 260. Here, "a region between the first protrusion 250 and the second protrusion 260" may include the first protrusion 250 and the second protrusion 260. FIG. 13 illustrates a state where the adhesive G injected into the corner hole 214 is applied to a region around the first protrusion 250 and the second protrusion 260. Here, "a region around the first protrusion 250 and the second protrusion 260" may include ends of the first protrusion 250 and the second protrusion 260 in the longitudinal direction of the holder 200 or a region around the ends of the first protrusion 250 and the second protrusion 260.

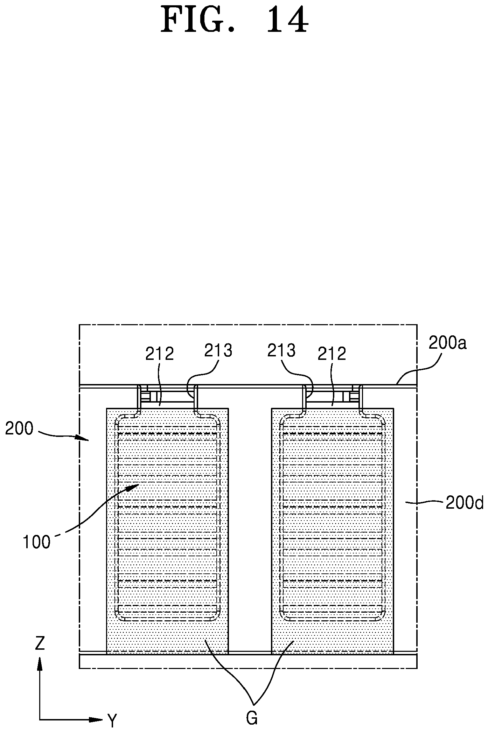

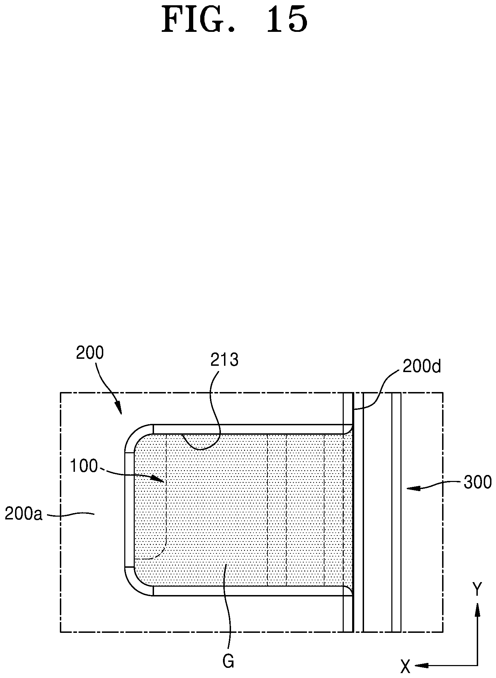

As shown in FIG. 14, the adhesive G may be injected into the rear hole 213, and the injected adhesive G may move downward by its own weight. A portion of the adhesive G may flow to the outside of the rear surface 200d through the rear surface holes 212, and the remaining portion may flow to the inside of the rear surface 200d. The adhesive G, which has a certain viscosity, may flow around a plurality of rear surface holes 212, as shown in FIG. 14. As shown in FIG. 15, the adhesive G may be applied to the inside and the outside of the holder 200 with respect to the rear surface hole 212. Accordingly, the stack cell 100 inside the holder 200 may be fixed to the holder 200, and the holder 200 may be fixed to the case 300 outside the holder 200. That is, the stack cell 100, the holder 200, and the case 300 may be fixed by the adhesive G around the rear surface hole 212. Accordingly, even if the battery pack 10 is shaken or receives an external impact, the stack cell 100, the holder 200, and the case 300 may be fixed to each other, thereby preventing the stack cell 100 from colliding with the holder 200 or the holder 200 from colliding with the case 300.

In a battery pack according to various embodiments, a stack cell, a holder, and a case stay fixed, relative to each other, together because of the adhesive. Thus, damage to the stack cell, the holder, and the case may be reduced.

In an embodiment, a method of forming a battery pack 10 may include injecting an adhesive G into at least one communication hole 210 formed in a holder 200 surrounding a stack cell 100, and the adhesive G may spread in the battery pack 10 so as to fix together the stack cell 100, the holder 200, and a case 300 surrounding the holder 200.

Technical effects of the disclosure are not limited to those discussed herein, and other unmentioned technical effects will be apparent to one of ordinary skill in the art from the description.

It should be understood that embodiments described herein should be considered descriptive only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

Embodiments are set out in the following clauses:
1. A battery pack comprising:
   a stack cell comprising a plurality of battery cells;
   a holder surrounding the stack cell and including at least one communication hole through which at least a part of the stack cell is exposed to outside of the holder;
   a case surrounding the holder; and
   an adhesive for fixing the stack cell, the holder, and the case together.
2. The battery pack of clause 1, wherein the adhesive is configured to fix the stack cell, the holder, and the case together in an area adjacent to the at least one communication hole.
3. The battery pack of clause 1 or 2, wherein the at least one communication hole has a form of a long hole in any one of a longitudinal direction, a width direction, and a height direction of the holder.
4. The battery pack of clause 1, 2 or 3, wherein the at least one communication hole comprises:
   a side surface hole formed in a side surface of the holder; and
   a corner hole formed in a top surface of the holder at a position corresponding to the side surface hole.
5. The battery pack of clause 4, wherein the side surface hole is spaced apart from a center in a longitudinal direction of the holder, is adjacent to a corner portion of the holder, and has a form of a hole in the longitudinal direction of the holder.
6. The battery pack of clause 5, wherein a plurality of side surface holes are positioned side by side in the longitudinal direction of the holder and are spaced apart from each other in the height direction of the holder,
   wherein the holder further comprises a plurality of ribs between the plurality of side surface holes,
   wherein the corner hole has a length in the longitudinal direction of the holder equal to or greater than a length of the side surface hole in the longitudinal direction of the holder.
7. The battery pack of clause 4, 5 or 6, wherein the adhesive fixes the stack cell, the holder, and the case together on an inner surface of the holder and an outer surface of the holder in an area adjacent to the side surface hole.
8. The battery pack of any one of clauses 4 to 7, wherein the holder comprises:
   a coupling surface formed on the side surface of the holder; and
   a protrusion formed on the coupling surface,
   wherein the side surface hole is at a more outer position in a longitudinal direction of the holder than the first protrusion in the longitudinal direction of the holder.
9. The battery pack of clause 8, wherein the protrusion is a first protrusion,
   wherein the holder further comprises a second protrusion adjacent to a corner portion of the holder, and
   wherein the side surface hole is positioned between the first protrusion and the second protrusion in the longitudinal direction of the holder.
10. The battery pack of clause 9, wherein the adhesive injected is applied between or around the first protrusion and the second protrusion.
11. The battery pack of clause 8, 9 or 10, wherein a plurality of coupling surfaces are provided on side surfaces of the holder,
   wherein a plurality of protrusions are provided at sides of the coupling surfaces,
   wherein the case comprises:
      a protruding portion formed on an inner surface and coupled to the coupling surface; and
      an insertion groove into which a protrusion of the coupling surface is inserted.
12. The battery pack of any preceding clause, wherein the at least one communication hole comprises:
   a rear surface hole formed in a rear surface of the holder; and
   a rear hole formed in a top surface of the holder.
13. The battery pack of clause 12, wherein the rear hole is positioned adjacent to the rear surface hole, is at a rear edge of the top surface of the holder, and is open to the rear surface hole.
14. The battery pack of clause 12 or 13, wherein the adhesive fixes the stack cell, the holder, and the case together on an inner surface of the holder and an outer surface of the holder in an area adjacent to the rear surface hole.
15. The battery pack of any preceding clause, wherein the at least one communication hole comprises a front hole in a top surface of the holder,
   wherein the holder comprises a slit formed in a front surface and into which a tab portion of each battery cell is inserted.
16. A method of forming a battery pack, the method comprising:
   injecting an adhesive into at least one communication hole formed in a holder surrounding a stack cell, the stack cell including a plurality of battery cells,
   wherein the adhesive spreads in the battery pack so as to fix together the stack cell, the holder, and a case surrounding the holder.
17. The method of clause 16, wherein the at least one communication hole includes a corner hole formed in a top surface of the holder and a side surface hole formed in a side surface of the holder, and
   wherein the adhesive is injected into the corner hole flows through the side surface hole so as to fix the stack cell, the holder, and the case together on an inner surface of the holder and an outer surface of the holder in an area adjacent to the side surface hole.
18. The method of clause 16 or 17, wherein the at least one communication hole includes a rear surface hole formed in a rear surface of the holder and a rear hole formed in a top surface of the holder, and
   wherein the adhesive is injected into the rear hole and flow through the rear surface hole to fix the stack cell, the holder, and the case together on an inner surface of the holder and an outer surface of the holder in an area adjacent to the rear surface hole.

## Claims

1. A battery pack comprising:
a stack cell comprising a plurality of battery cells;
a holder surrounding the stack cell and including at least one communication hole through which at least a part of the stack cell is exposed to outside of the holder;
a case surrounding the holder; and
an adhesive for fixing the stack cell, the holder, and the case together.

2. The battery pack of claim 1, wherein the adhesive is configured to fix the stack cell, the holder, and the case together in an area adjacent to the at least one communication hole.

3. The battery pack of claim 1 or 2, wherein the at least one communication hole has a form of a long hole extending in any one of a longitudinal direction, a width direction, and a height direction of the holder.

4. The battery pack of claim 1, 2 or 3, wherein the at least one communication hole comprises:
a side surface hole formed in a side surface of the holder; and
a corner hole formed in a top surface of the holder at a position corresponding to the side surface hole.

5. The battery pack of claim 4, wherein the side surface hole is spaced apart from a center of the side surface in a longitudinal direction of the holder, is adjacent to a corner portion of the holder, and has a form of a hole extending in the longitudinal direction of the holder.

6. The battery pack of claim 5, wherein a plurality of side surface holes are positioned side by side in the longitudinal direction of the holder and are spaced apart from each other in a height direction of the holder,
wherein the holder further comprises a plurality of ribs between the plurality of side surface holes,
wherein the corner hole has a length in the longitudinal direction of the holder equal to or greater than a length of the side surface hole in the longitudinal direction of the holder.

7. The battery pack of claim 4, 5 or 6, wherein the adhesive fixes the stack cell, the holder, and the case together on an inner surface of the holder and an outer surface of the holder in an area adjacent to the or each side surface hole.

8. The battery pack of any one of claims 4 to 7, wherein the holder further comprises:
a coupling surface formed on the side surface of the holder; and
a protrusion formed on the side surface,
wherein the or each side surface hole is at a more outer position than the protrusion in a longitudinal direction of the holder.

9. The battery pack of claim 8, wherein the protrusion is a first protrusion,
wherein the holder further comprises a second protrusion adjacent to a corner portion of the holder, and
wherein the or each side surface hole is positioned between the first protrusion and the second protrusion in the longitudinal direction of the holder, and optionally
wherein the adhesive injected is applied between or around the first protrusion and the second protrusion.

10. The battery pack of claim 8 or 9, wherein a plurality of coupling surfaces are provided on side surfaces of the holder,
wherein a plurality of protrusions are provided at sides of the coupling surfaces,
wherein the case comprises:
a protruding portion formed on an inner surface of the case and coupled to the coupling surface; and
an insertion groove into which a protrusion, which is located between the plurality of coupling surfaces, among the plurality of the protrusions is inserted.

11. The battery pack of any preceding claim, wherein the at least one communication hole comprises:
a rear surface hole formed in a rear surface of the holder; and
a rear hole formed in a top surface of the holder, and optionally
wherein the rear hole is positioned adjacent to the rear surface hole, is at a rear edge of the top surface of the holder, and is open to the rear surface hole, and/or
wherein the adhesive fixes the stack cell, the holder, and the case together on an inner surface of the holder and an outer surface of the holder in an area adjacent to the rear surface hole.

12. The battery pack of any preceding claim, wherein the at least one communication hole comprises a front hole in a top surface of the holder,
wherein the holder further comprises a slit formed in a front surface thereof and into which a tab portion of each of the plurality of battery cell is inserted.

13. A method of forming a battery pack, the method comprising:
injecting an adhesive into at least one communication hole formed in a holder surrounding a stack cell, the stack cell including a plurality of battery cells,
wherein the adhesive spreads in the battery pack so as to fix together the stack cell, the holder, and a case surrounding the holder.

14. The method of claim 13, wherein the at least one communication hole includes a corner hole formed in a top surface of the holder and a side surface hole formed in a side surface of the holder, and
wherein the adhesive is injected into the corner hole and flows through the side surface hole so as to fix the stack cell, the holder, and the case together on an inner surface of the holder and an outer surface of the holder in an area adjacent to the side surface hole.

15. The method of claim 13 or 14, wherein the at least one communication hole includes a rear surface hole formed in a rear surface of the holder and a rear hole formed in a top surface of the holder, and
wherein the adhesive is injected into the rear holes and flows through the rear surface hole to fix the stack cell, the holder, and the case together on an inner surface of the holder and an outer surface of the holder in an area adjacent to the rear surface hole.
